# EUROPEAN PATENT APPLICATION

(11) **EP 4 365 745 A1**
(43) Date of publication of application: **08.05.2024**
(21) Application number: 22205539.4
(22) Date of filing: 04.11.2022
(51) Int. Cl.: G06F 11/36

(54) **INTERFACE FOR PROCESSING OF SIMULATED SENSOR DATA**

(71) Applicant: AImotive Kft., 1025 Budapest (HU)
(72) Inventor: WACHA, Gábor József, 1062 Budapest (HU); LORD, Martyn Charles, 3066 Cserhátszentiván (HU); JUHÁSZ, András, 1122 Budapest (HU)
(74) Representative: Valvoda, Jakob

(57) **Abstract**

The present disclosure refers to a device for processing simulated sensor data. The device comprises a processing circuitry, a bus interface, and at least one output interface. The processing circuitry may be configured to process simulated sensor data and to output the processed simulated sensor data via the at least one output interface. The bus interface may be configured to connect the processing circuitry to a bus of a host system and to retrieve the simulated sensor data generated by the host system. The at least one output interface may be configured to connect the processing circuitry to a simulated test environment. Furthermore, a host system, a simulated test environment, and a method for processing simulated sensor data are described.

## Description

### TECHNICAL FIELD

The disclosure relates to processing of simulated sensor data. In particular, the present disclosure relates to a method and a device for processing simulated sensor data, to a host system for simulating sensor data, and to a simulated test environment. According to preferred embodiments, the present disclosure may relate to an interface of a driving simulator that processes simulated sender data.

### BACKGROUND

Simulated test environments, such as industrial processing simulators or driving simulators, to name a few, are used to test dedicated software or hardware components that have been engineered to operate in or react to particular environments. Such dedicated software or hardware components may include, for example, a car component for autonomous driving or a robot component for an industrial application. To be able to test the dedicated software or hardware in various scenarios, simulated test environments provide the dedicated software or hardware with simulated sensor output that affects the behavior of the dedicated software or hardware component in the simulated environment.

Simulated sensor output can be generated by general purpose processing units or dedicated processing units, such as graphics processing units (GPUs) or general processors, which may generate video data, LiDAR output, or other data reflecting physical properties, such acoustic data, temperature data, and the like. For example, GPUs can be provided in a graphics server and used to render video data of a simulated environment. The output rendered by the graphics server may be provided via a graphics interface, such as HDMI, DVI, DisplayPort, USB-C, or any other graphics interface or port suitable to carry video data. The output of the graphics server may be grabbed and converted by a hardware component and subsequently fed into the simulated test environment for testing purposes.

### SUMMARY

The present disclosure addresses drawbacks of existing approaches with regard to processing speed, latencies, and timing mismatch that may be caused, for example, when communicating the simulated sensor output to the simulated test environment. Simulated sensor output has to be provided preferably in real time or with reduced delay or latency to closely match real environments. Other drawbacks of existing approaches are directed at limited possibilities of the simulated test environment to provide feedback and adjust processing of the simulated sensor output.

Thus, there is a need in the art for further optimizing processing of simulated sensor data, such as providing, converting, or processing simulated sensor data in a manner that solves the aboveidentified problem.

The problem is solved by a method and a device for processing simulated sensor data, a host system for simulating sensor data, a simulated test environment, and at least one computer-readable medium, as defined in the independent claims. Preferred embodiments are defined in the dependent claims.

A first aspect of the disclosure defines a device for processing simulated sensor data. The device comprises a processing circuitry, a bus interface, and at least one output interface. The processing circuitry may be configured to process simulated sensor data generated by a host system and to output the processed simulated sensor data via the at least one output interface. The bus interface is configured to connect the processing circuitry to a bus of the host system and to retrieve the simulated sensor data (generated by the host system). The at least one output interface is configured to connect the processing circuitry to a simulated test environment (and to output the processed simulated sensor data).

The device may be built as an integrated device or an embedded device that may be integrated into the host system. For example, the bus interface of the device may be directly plugged into the bus of the host system, which may enable the device and/or the processing circuitry of the device to directly access other devices, processing units, or memories of the host system on a low hardware level. This may enable access in a highly efficient manner. It is to be understood that the term "bus" refers to any kind of interconnect or exchange link of the host system, which may provide for exchange of data, parameters, or commands between hardware or software components of the host system on a low system or hardware level. In particular, the bus interface is not restricted to existing bus technology. Rather, any kind of bus technology or interface may be used and is encompassed by the present disclosure.

The host system may be configured to generate simulated sensor data using general purpose processing units or dedicated processing units of the host system. For example, at least one central processing unit or at least one graphics processing unit can be used to generate the simulated sensor data. The simulated sensor data is retrieved by the device and/or the processing circuitry via the bus and preferably buffered in an internal memory or buffer. Thus, the processing circuitry may directly access the simulated sensor data in a format that has been directly output by the central processing unit or the graphics processing unit. This direct access avoids any processing required to grab the simulated sensor output at an output interface of the host system, which significantly increases the processing speed and reduces latency.

The simulated sensor data is processed such that the simulated sensor data can be output via the at least one output interface. Preferably, the simulated sensor data may be converted into a format suitable for or required by the simulated test environment. The at least one output interface may be connectable to the simulated test environment in a direct manner, which again reduces latency.

In a preferred embodiment, the processing circuitry is configured to convert the simulated sensor data. The simulated sensor data may be converted into a format that may correspond to an output format of a real sensor for which sensor data is simulated. For example, output of a real camera may be simulated by rendered graphics data that may be converted according to an interface protocol of the real camera. The interface protocol may include one or more of GMSL, FPD-III, or MIPI, to name a few. As such, the simulated test environment may feed the simulated sensor data into the tested dedicated software or hardware component as real sensor output, such as real camera frames. This further reduces the required processing steps, such as converting output of the simulation unit in the host system to an output format, such as HDMI output of graphics data, and converting the HDMI output into the desired interface protocol. Instead, the direct output of the simulator unit, such as GPU, is directly converted according to the target interface protocol.

According to a particularly preferred embodiment, the processing circuitry is configured to output one or more of sensor parameters and status information. The sensor parameters and status information may reflect processing parameters of the simulated real sensor that were applied to generate the simulated sensor data. The sensor parameters and/or status information may be included into the output according to a target interface protocol. In this way, the dedicated software or hardware component in the simulated test environment may receive and use processing parameters of the simulated sensor as if the real sensor was connected to the simulated test environment. Even if a simulator unit of the host system would be aware of parameters of the simulated real sensor, the output interface protocols of the host system, such as the graphics output protocols, do not allow for inclusion of processing parameters reflecting a status and settings of a real sensor, such as a video camera, microphone, or LiDAR. This increases the degree of reality of the simulated sensor data.

According to another embodiment, the device further comprises a feedback interface connectable to the simulated test environment and configured to receive one or more parameters, wherein the processing circuitry is configured to pass at least some of the one or more parameters to the host system. The feedback interface enables a better coupling to the simulated test environment by providing a direct link or a reverse control channel for feedback data, including the one or more parameters. The received one or more parameters (or a portion thereof) can be directly passed via the bus interface to the host system. The parameters may be directly provided to the simulation unit in the host system. This may include configuring the host system and/or the simulation unit using (at least some of) the one or more parameters, thereby affecting generation of the simulated sensor data in the host system. Thus, the feedback interface may enable one or more feedback channels from the simulated test environment (or directly from the dedicated software or hardware component under test in the simulated test environment) towards the simulation units of the host system. For example, exposure request (trigger or synchronization) signals can be propagated back to the host system via interrupts triggered by a serialized camera trigger interference, in response to a frame request from the dedicated software or hardware component under test in the simulated test environment. This allows the host system and the simulated test environment to stay in synchronization with the dedicated software or hardware component under test. This may be important, for example, for multi-sensor or multi-camera environments, such as, in stereo view environments.

In yet another embodiment, the processing circuitry is configured to timestamp the processed simulated sensor data. This may include adding of timestamps to the simulated sensor data. Timestamps may be used to further improve the degree of reality of the simulated sensor data. By default, timestamps (or timestamp information or timestamp data) are not provided by host systems using standard interfaces, such as HDMI ports. HDMI ports only allow outputting image data; they do not contain metadata channels for accommodating timestamps or exposure time data. For example, auxiliary data in HDMI formats concern only image or audio quality aspects or allow for synthesizing an audio sample clock only. Thus, one approach could include overlaying the rendered images with timestamps by overwriting (or otherwise combining) actual image pixels with the timestamps, which may affect the quality of the simulated sensor data. This may be critical, for example, in autonomous driving or industrial simulators. Preferably, the device (and/or the processing circuitry of the device) may implement timestamping logic on the device, thereby enabling timestamp processing close to the origin of the simulated sensor data. Moreover, if multiple, parallel sensor data streams are used, such as parallel image streams, the parallel sensor data streams may be synchronized before they are output and transmitted via the at least one output interface or a respective plurality of output interfaces, such as in a batch, to the simulated test environment. This may include synchronizing a plurality of simulated sensor data, including the simulated sensor data, of a plurality of different (simulated) sensors. For example, video data of a simulated video camera may be synchronized with one or more other simulated sensor data, for example, radar, LiDAR, or CAN signals, if the one or more other simulated sensor data are provided by the host system.

According to another embodiment, the device further comprises a memory and memory logic, wherein the bus interface is configured to buffer the simulated sensor data in the memory and the processing circuitry is configured to request access to the buffered simulated sensor data via the memory logic. The device may retrieve the simulated sensor data from the host system, such as, via the bus, and preferably from a memory or buffer of the host system using direct memory access, or directly from the simulation unit in the host system. The retrieved simulated sensor data may be buffered in the memory of the device to enable further logic units on the device, such as output logic unit or conversion logic unit, to access the simulated sensor data. If multiple logic units are supplied in the device, for example, in order to process the simulated sensor data for a plurality of output interfaces, the memory logic may control access to the buffered sensor data in the memory for each logic unit. The memory logic may include an arbiter and a multiplexer which may switch communication links between the memory (or a respective memory interface and/or memory controller) and the respective logic units. The arbiter may control a sequence in which each of the logic units is connected to the memory (or a respective memory interface and/or memory controller). The arbiter may ensure that each logic unit which is requesting access to the memory is serviced, for example, in strict rotation. This may be done to ensure that equal bandwidth is offered to each logic unit which is requesting access to the memory.

In a preferred embodiment, the simulated sensor data is one or more of graphics data, radar data, and LiDAR data. Preferably, the simulated sensor data is graphics data. The graphics data may be a simulated video output. The simulated video output may simulate the output of a real video camera. The simulated sensor data may be generated on the host system by using one or more graphics processing units (GPUs), such as on one or more graphics cards. The GPUs may render views on a simulated environment according to one or more parameters that may, for example, define one or more of camera parameters, such as position, orientation, field of view, exposure time, and the like; output parameters, video parameters, such as frame rate, resolution, and the like; and further parameters defining generation of the simulated sensor data.

In a further embodiment, the device is a semiconductor card. The semiconductor card may be an expansion card for the host system, which may include semiconductor circuitry. The term expansion card is to be understood as a card that provides functionality for a host system, wherein the card can be inserted into a connector or expansion slot or bus slot of the host system. Thus, the expansion card can also be referred to as an expansion board, an adapter card, a peripheral card, or an accessory card throughout this disclosure. For example, the device (or the semiconductor card) may be an FPGA card or an ASIC card. FPGA and ASIC define programmable circuitry that can be configured for various tasks and purposes, which can be completed or performed in a highly efficient manner. FPGA is an acronym for field programmable gate array. It is an integrated circuit (IC) where a large majority of the electrical functionality inside the device can be changed at various stages of the life cycle of the FPGA. Changes can be done by design engineers, during a PCB assembly process, or after shipping to customers. Similarly, ASIC is an acronym for application-specific integrated circuit. Similar to FPGA, ASIC represents an IC chip customized for a particular use or functionality. The semiconductor card may include the IC or one or more respective IC chips, and further logic or logic units that may couple the IC (chips) to a memory, a bus, a functional unit, one or more interfaces, and the like, in any combination. For example, the semiconductor card may provide the bus interface to interconnect the IC chip(s) and the further logic (units) with the bus of the bus system.

Preferably, the bus interface is a parallel or serial expansion bus interface. This may include one or more of PCI Extended (PCI-X), PCI Express (PCIe), Mini PCIe, M.2, Accelerated Graphics Port (AGP), PCI, Industry Standard Architecture (ISA), Micro Channel Architecture (MCA), VESA Local Bus (VLB), and the like.

The present disclosure is directed at any kind of software or hardware testing that requires simulated sensor data. This includes various industrial applications, such as testing of robot components or functional parts of assembly lines and other automated processes in industrial applications. Other application areas include testing of various kinds of vehicles, such as drones or cars. In one preferred embodiment, the simulated test environment is an autonomous driving simulator. Testing software or hardware for autonomous driving requires various sensor data to be simulated. This may include one or more of simulated camera feeds, simulated LiDAR data, processing data of a simulated car, and the like, in any combination. The simulated camera (or video) feeds may be generated using one or more GPUs in the host system, which may be configured as a GPU server, a graphics server, or a render server. The device according to the present disclosure enables a direct coupling of the graphics server to the simulated test environment for testing dedicated software and/or hardware components for autonomous driving. The output of the graphics server is directly transferred within the host system to the device; the simulated sensor data is processed and directly passed to an output interface matching the requirements of the autonomous driving simulator. Thus, delays and latencies imposed by grabbing graphics output at interfaces of the host system is effectively reduced by the inventive device (and respective system configuration).

A second aspect of the disclosure defines a host system for simulating sensor data, comprising at least one central processing unit, a bus, and system memory. The host system further comprises at least one (dedicated) simulation unit coupled to the bus, which is configured to generated simulated sensor data, and at least one device coupled to the bus. The device may be a device according to one or more embodiments of the first aspect. In particular, the device may comprise a processing circuitry, a bus interface, and at least one output interface. The bus interface may be configured to connect the processing circuitry (or the device) to the bus of the host system and to retrieve the simulated sensor data generated by the host system, preferably generated by the at least one (dedicated) simulation unit. The at least one output interface may be configured to connect the processing circuitry (or the device) to a simulated test environment. The processing circuitry may be configured to process the simulated sensor data and to output the processed simulated sensor data via the at least one output interface.

In a preferred embodiment, the at least one device is configured to retrieve the simulated sensor data via the system memory or via a buffer of the at least one simulation unit. Simulation units generate simulated sensor data, which is typically provided via a standardized output interface of the host system, such as a graphics port. Instead of grabbing the output, the host system provides a component that is configured to retrieve the simulated sensor data via internal memory, such as the system memory or the buffer of the simulation unit. For example, the simulation unit may buffer generated simulated sensor data in an internal buffer of the simulation unit, and the device may directly access the buffer, preferably via the bus, to retrieve and directly process the simulated sensor data. For example, a GPU may buffer rendered frames in an internal buffer of the GPU, and the device may directly access the buffer of the GPU to retrieve and directly process the rendered data. Likewise, the simulation unit may be configured to write the generated simulated sensor data into system memory or other memory within the host system configured to receive the simulated sensor data. The device may directly access the system memory or the other memory, preferably via the bus, to retrieve and directly process the simulated sensor data.

Preferably, the simulated sensor data is retrieved using direct memory access (DMA). DMA is a configuration of computer systems, such as the host system, that allows components to access memory without involving a central processing unit of the computer system. DMA can be used for system memory or other memory (units) or buffers in the computer system. Accordingly, the device may directly address the system memory or other memory units of the host system, and retrieve data stored in the system memory or the other memory units, preferably without involving the at least one central processing unit of the host system. Additionally, or as an alternative, the device may directly address a buffer of the simulation unit in the host system and retrieve data stored in the buffer, preferably without involving the at least one central processing unit of the host system. The DMA access is preferably performed via the bus of the host system. Thus, the simulation unit can function in a usual way and write output to the system memory, other memory, or the buffer, to provide the simulates sensor data. However, it is to be understood that the present disclosure may also enable a further link between the at least one simulation unit and the device, which can be used to retrieve the simulated sensor data from the simulation unit.

In one embodiment, the host system is a graphics server. Preferably, the at least one dedicated simulation unit includes a graphics processing unit. The graphics server may also be referred to as a GPU server or a render server.

According to a preferred embodiment, the at least one simulation unit includes a LiDAR simulation unit. Further simulation units for other types of sensor data are also encompassed by the present disclosure.

Preferably, the host system may simulate a virtual environment with virtual objects. The virtual objects can be arranged in a scene graph. The virtual environment may be based on map data or a construction plan or a building plan of an industrial environment, or any other data suitable for describing a (real) environment that is constructed as the virtual environment.

The at least one central processing unit may be configured to simulate the virtual objects of the virtual environment using one or more simulation engines, such as a physics engine, a graphics engine, other simulation engines, and the like, in any combination. For example, the host system may implement a real-time 3D engine to enable a flexible simulation of the virtual environment. The host system may utilize the one or more engines to render the virtual environment according to one or more modalities, including a visual modality or an acoustic modality. For example, a (visual) renderer may provide video data, which may preferably include a sequence of images or a video stream representing the virtual environment. The sequence of images or the video stream may include stereo image data, in order to enable a stereoscopic representation of the simulated virtual environment. The at least one central processing unit may further utilize the renderer or an (acoustic) renderer to generate audio data representing the virtual environment. The audio data may include acoustic information enabling a spatial representation of sound. The virtual environment may be further simulated and rendered according to any other modality, such as the haptic, gustatory or olfactory modality, in any combination. For each modality, the host system may include a simulation unit, which may be configured to execute the respective renderer or rendering engine. The renderer or rendering engine may render the simulated virtual environment based on parameters of a simulated sensor in the virtual environment, such as a virtual camera, a virtual LiDAR, a microphone, and the like, which may include one or more of position and orientation in the virtual environment, and further processing parameters of the simulated sensor, such as, for a virtual camera, field of view, exposure time, and the like.

Preferably, the one or more simulation engine may include a real time graphics engine or rendering engine configured to generate a rendered output responsive to at least one application. A rendering engine, as used throughout this description, may be a software and/or hardware framework capable of receiving an abstract representation of a scene, such as the scene graph, including the virtual objects with one or more of graphic elements, acoustic elements, and elements of any other modality, as well as definitions of conditions in the scene, such as light conditions. The rendering engine may be capable of processing the information and delivering a realistic representation of the scene. The rendering engine may be implemented on a simulation unit and utilize dedicated rendering hardware capable of computing a realistic appearance of the virtual objects in the virtual environment taking into account surface characteristics, reflections, multiple light sources, ambient light, and other conditions. Preferably, the simulation engine may be implemented by the at least one central processing unit of the host system to simulate the virtual environment. Preferably, the rendering engine (or other engines for other modalities or simulated sensors) may be implemented on the simulation units, independent of any application executed on the host system. Thus, the rendering engine may be provided as hardware, software, or a combination thereof.

A third aspect of the disclosure defines a simulated test environment, comprising: one or more processing units, each processing unit configured to simulate a physical environment using one or more simulated sensor data, wherein at least one of the one or more simulated sensor data is received from a host system according to one or more embodiments of the third aspect of the present disclosure. In particular, the host system may be configured for simulating sensor data, and comprises at least one central processing unit, a bus, and system memory. The host system further comprises at least one (dedicated) simulation unit coupled to the bus, which is configured to generated simulated sensor data, and at least one device coupled to the bus. The device may be a device according to one or more embodiments of the first aspect. In particular, the device may comprise a processing circuitry, a bus interface, and at least one output interface. The bus interface may be configured to connect the processing circuitry (or the device) to the bus of the host system and to retrieve the simulated sensor data generated by the host system, preferably generated by the at least one (dedicated) simulation unit. The at least one output interface may be configured to connect the processing circuitry (or the device) to the simulated test environment. The processing circuitry may be configured to process the simulated sensor data and to output the processed simulated sensor data via the at least one output interface.

A fourth aspect of the disclosure defines a method for processing simulated sensor data, comprising: providing a device with a bus interface, at least one output interface, and a processing circuitry, the bus interface coupled to a bus of a host system and the at least one output interface connected to a simulated test environment; retrieving, by the bus interface, simulated sensor data generated by the host system; processing, by the processing circuitry, the simulated sensor data; and outputting, by the processing circuitry, the processed simulated sensor data via the at least one output interface.

The method may be a computer-implemented method. In particular, the method may be a method executed by the processing circuitry of one or more embodiments of the first aspect. The method may be further executed in a system, including the simulated test environment according to the third aspect, the host system according to the second aspect, wherein the host system may be equipped with the device according to the first aspect. In one or more embodiments, the method may be a method for testing software and/or hardware in a simulated test environment based on simulated sensor data generated by a host system, wherein the simulated sensor data is processed by a device in the host system or embedded in the host system.

According to one embodiment, the method further comprises converting the simulated sensor data.

In a preferred embodiment, the method further comprises outputting one or more of simulated sensor parameters and simulated status information.

In a further embodiment, the method further comprises receiving, by the device, one or more parameters from the simulated test environment, and passing, by the processing circuitry, at least some of the one or more parameters to the host system.

According to a preferred embodiment, the method further comprises timestamping, by the processing circuitry, the processed simulated sensor data.

In one embodiment, the method further comprises buffering, by the bus interface, the simulated sensor data in a memory of the device, and requesting, by the processing circuitry, access to the buffered simulated sensor data via a memory access unit of the device.

A fifth aspect of the disclosure defines a computer-readable medium having instructions stored thereon, wherein said instructions, in response to execution by a computing device, cause the said computing device to perform a method according to one or more embodiments of the fourth aspect of the present disclosure. In particular, the method may be for processing simulated sensor data, comprising: providing a device with a bus interface, at least one output interface, and a processing circuitry, the bus interface coupled to a bus of a host system and the at least one output interface connected to a simulated test environment; retrieving, by the bus interface, simulated sensor data generated by the host system; processing, by the processing circuitry, the simulated sensor data; and outputting, by the processing circuitry, the processed simulated sensor data via the at least one output interface. In one or more embodiments, the method may be a method for testing software and/or hardware in a simulated test environment based on simulated sensor data generated by a host system, wherein the simulated sensor data is processed by a device in the host system or embedded in the host system.

It is to be understood that embodiments according to the first, second, or third aspect may configure a logic, processor, or functional unit according to features of an embodiment of the fourth aspect of the disclosure, in any combination. Preferably, the apparatus, the host system, and the simulated test environment may be configured according to embodiments of the fourth aspect, in any combination. Likewise, the method according to embodiments of the fourth aspect may include processing steps reflecting structural features of the apparatus, the host system, and the simulated test environment, in any combination.

### BRIEF DESCRIPTION OF THE DRAWINGS

Specific features, aspects, and advantages of the disclosure will be better understood with regard to the following description and accompanying drawings where:
- Figure 1: illustrates a conventional generation of simulated sensor data for a simulated test environment;
- Figure 2: illustrates a schematic layout of a host system according to an embodiment of the disclosure;
- Figure 3: shows a flow chart of a method according to an embodiment of the disclosure;
- Figure 4: details a host system embedding a device according to an embodiment of the disclosure;
- Figure 5: details a host system embedding a device according to an embodiment of the disclosure;
- Figure 6: shows a schematic layout of a device for processing simulated sensor data according to an embodiment of the disclosure;
- Figure 7: provides details of a register simulator component of a device according to an embodiment of the disclosure;
- Figure 8: details of a video output component of a device according to an embodiment of the disclosure; and
- Figure 9: illustrates details of an implementation of a device according to an embodiment of the disclosure.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

The techniques described herein may be implemented in various computing systems, examples of which are described in greater detail below. Such systems generally involve the use of suitably-configured computing devices implementing a number of modules, each providing one or more operations needed to complete execution of such techniques. Each module may be implemented in its own way; all need not be implemented the same way. As used herein, a module may be a structural component of a system which performs an operational role, which may be a portion of or an entire software element (e.g., a function of a process, a discrete process, or any other suitable embodiment). A module may comprise computer-executable instructions and may be encoded on a computer storage medium. Modules may be executed in parallel or serially, as appropriate, and may pass information between one another using a shared memory on the computer on which they are executing, using a message passing protocol or in any other suitable way. Exemplary modules are described below carrying out one or more tasks, though it should be appreciated that the modules and division of tasks described may be merely illustrative of the type of modules that may implement the exemplary techniques described herein, and that the invention is not limited to being implement in any specific number, division, or type of modules. In some implementations, all functionalities may be implemented in a single module. Further, the modules are discussed below as all executing on a single computing device for clarity, though it should be appreciated that, in some implementations, the modules may be implemented on separate computing devices adapted to communicate with one another. In particular, the modules may be implemented on a device for processing simulated sensor data, on a host system or in a simulated test environment according to one or more embodiments of the present disclosure, in any combination.

Throughout this disclosure, the abbreviations may be used to refer to known technology. For example, AD refers to Automated Driving or Autonomous Driving; ASIC refers to Application-Specific Integrated Circuit; DMA refers to Direct Memory Access; FPD-Link refers to Flat Panel Display Link; FPGA refers to Field Programmable Gate Array; GMSL refers to Gigabit Multimedia Serial Link; HDMI refer to High-Definition Multimedia Interface; HIL refers to Hardware in the Loop; I2C refers to Inter-Integrated Circuit; ISP refers to Image Signal Processor; PCIe refers to Peripheral Component Interconnect Express. Other known abbreviations may be used referring to the technology known to a person skilled in the art.

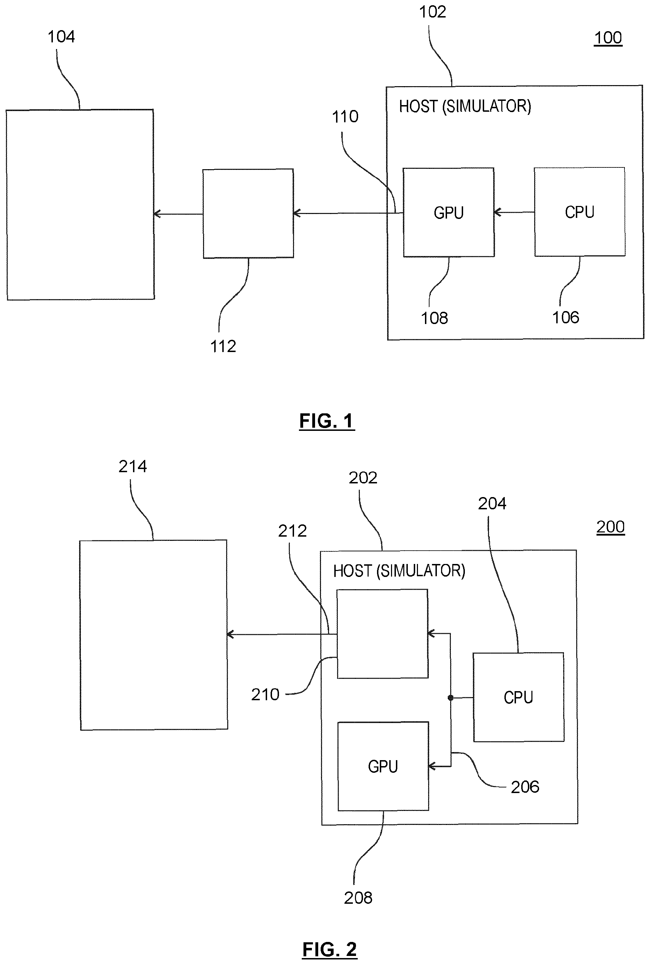

Figure 1 illustrates conventional generation of simulated sensor data for a simulated test environment. Figure 1 shows a system 100 with a host system 102 and a simulated test environment 104. The simulated test environment 104 may be an industrial processing simulator or an (automated) driving simulator.

The simulated test environment 104 may use simulated sensor data to test dedicated software or hardware components that have been engineered to operate in or react to particular environments, such as a car component for autonomous driving, automated driving (AD) software, a robot component for an industrial application, and the like.

Irrespective of what kind of hardware or software is to be tested, it is important to integrate the final hardware platform, such as robot hardware platform or automotive hardware platform into the simulation pipeline as much and as early as possible, to save valuable time and mileage in test robots in industrial environments or test vehicles and to reveal corner cases that are hard to evoke in real-world testing.

One way of such "hardware in the loop" (HIL) testing is to feed simulated sensor data to the simulated test environment 104 to the target, such as the embedded automotive hardware platform running the AD software.

The simulated sensor data can be generated on the host system 102 using one or more general purpose processing units 106 or dedicated processing units, such as one or more graphics processing units (GPUs) 108, which may generate the required simulated sensor data. For example, the GPUs 108 can render video data 110 of a simulated environment and the output rendered by the GPUs 108 may be provided via a graphics interface, such as HDMI, DVI, DisplayPort, USB-C, or any other graphics interface or port suitable to carry video data.

Conventional HIL testing relying on port output requires a purpose-built, external hardware element 112 that grabs and converts the simulated sensor data into a serial interface-compatible format. Typically, it may be complicated and time-consuming to design and manufacture the external hardware element 112, and such a solution even adds further delays in the propagation of the simulation sensor data. The hardware component 112 may feed the converted data into the simulated test environment 104 for simulation and testing of the dedicated software or hardware components. Accordingly, current HIL testing includes transmitting simulated video output, which relies on and uses the regular display or HDMI output ports of the GPUs 108. Here the propagation time from the render buffer of the GPUs 108 and external timestamping logic by the hardware component 112 can cause observable delays.

The propagation delay could amount to 30 to 100 milliseconds, which can significantly affect the simulation and testing.

Simulating and testing the dedicated software or hardware components, such as AD software heavily relies on large-scale simulation testing. This requires increased rendering capabilities of the host system 102, and typically needs a large infrastructure of GPU server farms, as well as tight scheduling and maximized efficiency and utilization of the available hardware infrastructure so that thousands of simulated test cases can be run in a short timeframe. Accordingly, timing considerations are highly relevant, and every millisecond matters that one can spare while executing a simulated test scenario.

It is to be understood that even though examples and embodiments may refer to HDMI ports, HDMI is only one widely used port type, and other output ports that can carry video or other sensor data (e.g., DVI, DisplayPort, USB-C, Thunderbolt, NDI, SDI, etc.) may be applied with the same or similar constraints than HDMI.

The aforementioned delay issues are resolved, and timing considerations are addressed by the host system according to an embodiment of the disclosure, as shown in Figure 2. Figure 2 illustrates a schematic layout of a system 200 including the host system 202 according to an embodiment of the disclosure. The host system 202 may be configured to simulate sensor data and comprises at least one central processing unit 204, a bus 206, and system memory. The host system 202 further includes at least one dedicated simulation unit 208 coupled to the bus 206 and configured to generated simulated sensor data. The at least one dedicated simulation unit 208 may be one or more GPUs configured to render video data. The host system 202 further comprises at least one device 210 coupled to the bus 206. The at least one device 210 may be embedded within the host system 202. The host system 202 may treat the at least one device 210 as an internal component, enabling the at least one device 210 to access internal data, protocols, other hardware components, and the like, of the host system 202 in a highly efficient manner.

The device 210 may be configured for processing the simulated sensor data and may comprise a bus interface to connect the device to the bus 206 and to retrieve the simulated sensor data generated by the at least one dedicated simulation unit 208. The simulated sensor data may be retrieved via the bus 206 from the dedicated simulation unit 208, a buffer of the dedicated simulation unit 208, such as a render buffer, or a buffer or memory of the host system 202 external to the dedicated simulation unit 208.

The device 210 may further comprise one or more output interfaces 212 that may be used to connect the host system 202 to a simulated test environment 214. A processing circuitry of the device 210 may be configured to process the simulated sensor data and to output the processed simulated sensor data via the at least one output interface to the simulated test environment 214.

Embodiments of the present disclosure may embody the device 210 as a custom hardware device, which may be, for example, an (FPGA) expansion card inserted into a (PCIe) bus slot of the host system 202 itself. The host system 202 may implement a simulator software. Thus, the device 210 can directly read the memory or buffer of the host system 202 or directly access each one of the at least one dedicated simulation unit 208 to retrieve the simulated sensor data and output the processed data directly to the output interface, for example using a serial interface format, e.g., GMSL, to the simulated test environment 214.

It is to be understood that even though examples and embodiments may refer to FPGA as one technique to implement the device 210 as circuitry, logic or expansion card, the disclosure is viable through the development and application of other semiconductor technology, such as ASIC and the like.

Additionally, or as an alternative, other sensor data (e.g., that of LiDARs or other sensors) can be simulated, processed and transmitted, and the use of video data is an example for simulated sensor data.

In one or more embodiments, the device 210 may have a DMA controller, a memory, and camera output interfaces. Preferably, under the control of a software driver, the device 210 may transfer the rendered simulator image from a GPU render buffer to the memory of the device 210.

This can be done, for example, by directly transferring a rendered image, frame or tile, or any other kind or portion of rendered data, from the render buffer to the memory in the device 210 by Direct Memory Access (DMA), or by first transferring the rendered image, frame or tile, or any other kind or portion of rendered data, from the render buffer to a system memory, and then from the system memory to the memory in the device 210.

This may be completed by the DMA controller of the device 210. The used transfer method may depend on the capability of the dedicated simulation unit 208, in this case the rendering device or GPU.

Direct Memory Access allows saving CPU overhead of data transfers. With DMA, the central processing unit 204 does not need to be actively involved in the data transfer operation; it only needs to initiate the data transfer, then it can do other operations while the transfer is in progress, and it preferably finally receives an interrupt from the DMA controller (DMAC) when the operation is done.

The device 210 transforms and outputs the retrieved image(s), frame(s) or tile(s), or any other kind or portion of rendered data in any number, into a target format of the simulated test environment 214. This may include, for example, GMSL/GMSL2, used by typical automotive grade cameras, to feed an automotive HW platform like NVidia Drive PX or Drive AGX (Xavier, Pegasus).

Embedding the device 210 into the host system 202 may save 10s or 100s of milliseconds for each scenario (test case) execution, which is vital in running a large number of simulation test cases, such as thousands of server-based simulation test cases.

Latency may also affect decision-making algorithms of the tested hardware or software, such as AD software, for each frame. For example, the sooner the AD software can process an image, the sooner it can react to an overall traffic scene. For example, when testing AD software behavior in a highway environment of speeds of 100-130 km/h (28-36 m/s), saving 100 ms in a vehicle control cycle can save valuable meters on the simulated roads and can relieve the vehicle control algorithms of the AD software in compensating for the effect of data transmission latencies.

In contrast to the approach as illustrated in Figure 1, which included a propagation delay of 30 to 100 milliseconds, the embodiment illustrated in Figure 2 has a propagation delay of well below 1 millisecond.

Again, AD software is one example of a dedicated hardware or software component tested in the simulated test environment 214 and the present disclosure is not restricted to a particular use case. Rather, other dedicated hardware or software components in industrial applications are also encompassed, such as automated robots in assembly lines, and the like.

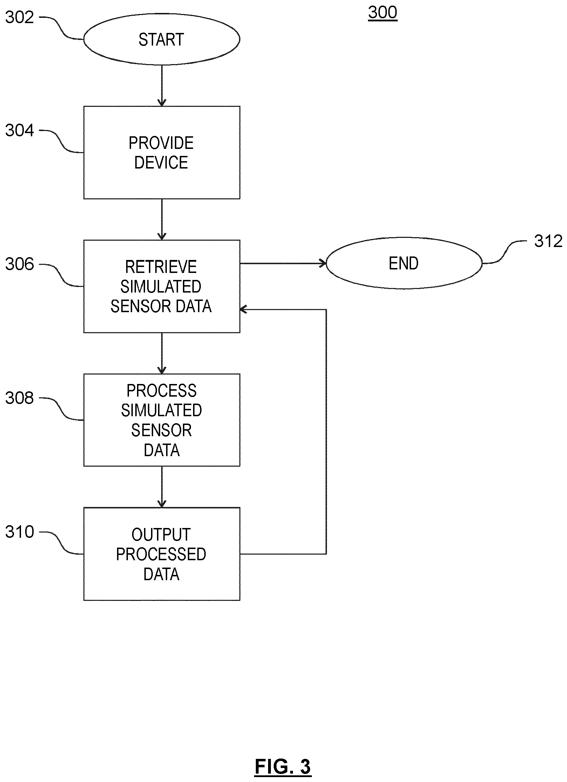

Figure 3 shows a flow chart of a method according to an embodiment of the disclosure. The method 300 may be a computer-implemented method, which may be executed on a computing device or on a plurality of computing devices. The plurality of computing devices may include the host system 202 and/or the simulated test environment 214 as shown in Figure 2.

The method 300 may start in item 302. The method 300 may be for processing simulated sensor data.

The method 300 may comprise providing 304 a device. The device may be the device 210 of Figure 2. The device may include a bus interface, at least one output interface, and a processing circuitry, the bus interface coupled to a bus of a host system and the at least one output interface connected to a simulated test environment. Accordingly, the host system may be the host system 202 and the simulated test environment may be the simulated test environment 214 as shown in Figure 2.

The method 300 may proceed in item 306 by retrieving, by the bus interface or the device, simulated sensor data generated by the host system. The simulated sensor data may be retrieved using DMA from a buffer or memory of the host system, or directly from one or more dedicated simulation units of the host system.

In item 308, the processing circuitry or the device may process the simulated sensor data. In item 310, the processing circuitry or the device may output the processed simulated sensor data via the at least one output interface.

The method 300 may iterate by returning to item 306 and retrieving further data. The method 300 may end in item 312.

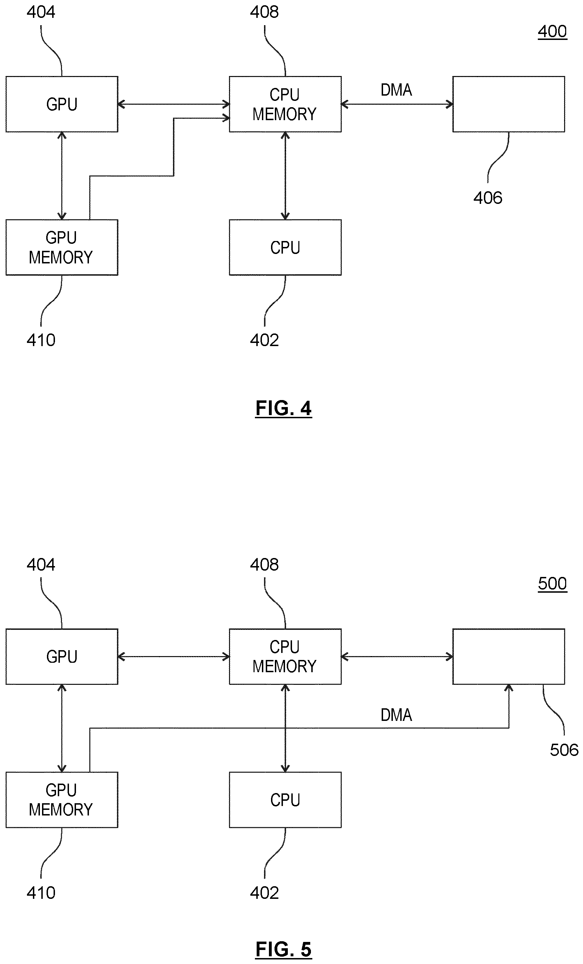

Figures 4 and 5 detail host systems embedding a device according to an embodiment of the disclosure. The host systems 400 and 500 may depict similar configurations. Thus, similar components are designated using the same reference numerals. The host systems 400 and 500 may include a CPU 402, and a GPU 404. The host system 400 may include an HIL circuitry 406. The host system 500 may include an HIL circuitry 506. The CPU 402 may correspond to the central processing unit 204 as shown in Figure 2 and may have an associated CPU memory 408. The GPU 404 may correspond to the dedicated simulation unit 208 as shown in Figure 2 and may have an associated GPU memory 410. Each of the HIL circuitry 406, 506 may correspond to the device 210 as shown in Figure 2.

Figures 4 and 5 show embodiments of HIL circuitry 406 and 506, respectively, illustrating possible paths for retrieving simulated sensor data generated by the GPU 404 by the HIL circuitry 406 and506. The HIL circuitry 406 retrieves the simulated sensor data from CPU memory 408, preferably using DMA. The GPU 404 may either render to the CPU memory 408 or the system may apply texture copy to move rendered data from GPU memory 410 into CPU memory 408. Additionally, or as an alternative, the HIL circuitry 506 may directly access the GPU memory 410, preferably using DMA, to retrieve the rendered data.

DMA is a preferred technique to access memory or other hardware within the host without involving interaction with the CPU 402. It is to be understood that other techniques for direct access to memory, buffers, or hardware components could be implemented in the host system and these other techniques are encompassed by the present disclosure.

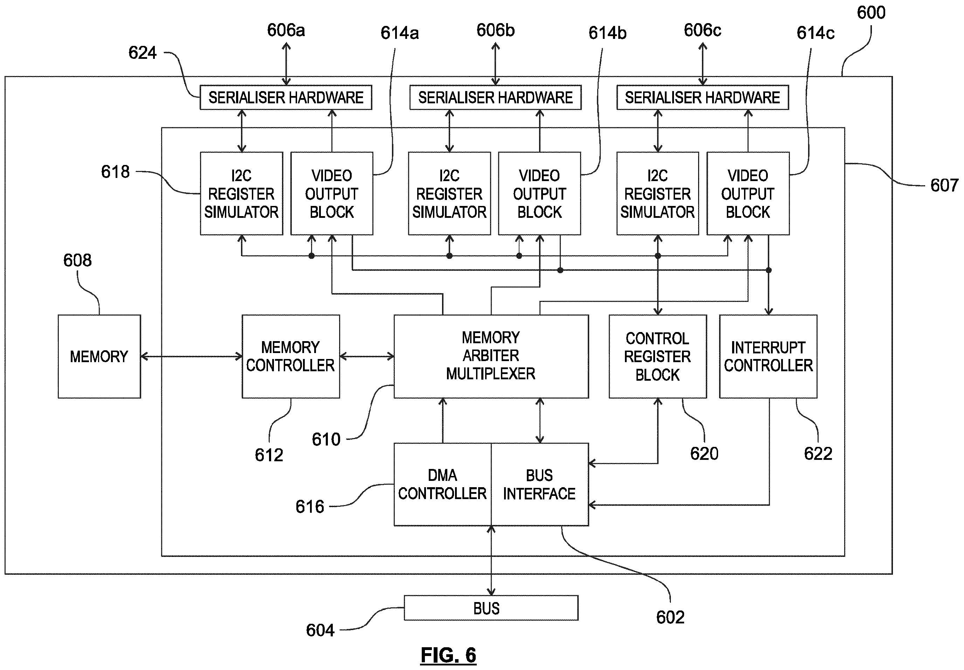

Figure 6 shows a schematic layout of a device for processing simulated sensor data according to an embodiment of the disclosure. The device 600 may correspond to the device 210 of Figure 2, to the HIL circuitry 406 of Figure 4, or to the HIL circuitry 506 of Figure 5.

The device 600 may comprise a bus interface 602 configured to connect the device 600 to a bus 604 of a host system and to retrieve simulated sensor data generated by the host system. The device further comprises a plurality of output interfaces 606a, 606b, and 606c configured to connect the device 600 to a simulated test environment. It is to be understood that even though three output interfaces 606a, 606b, and 606c are shown in Figure 6, the device can be scaled from a single output interface up to any number of output interfaces, such as two output interfaces, four output interfaces, five output interfaces, six output interfaces, seven output interfaces, eight output interfaces, or any other number of output interfaces, in any combination. The three output interfaces 606a, 606b, and 606c are shown for illustrative purposes only.

The device 600 may further comprise a plurality of blocks or units configured to process the simulated sensor data and to output the processed simulated sensor data via the output interfaces 606a, 606b, and 606c.

The blocks or units may be implemented as hardware blocks or units, such as a semiconductor block or unit. Accordingly, the plurality of blocks or units may be designated as a processing circuitry 607 throughout this disclosure. At least parts of the blocks or units may further represent software instructions performed by the block or unit to perform a task. Each block or unit may be implemented in its own way; all need not be implemented the same way. As used herein, a block or unit may be a structural component of a semiconductor device which performs an operational role. A block or unit may comprise hardware elements and/or computer-executable instructions. Blocks or units execute in parallel or serially, as appropriate, and may pass information between one another using communication links and/or busses and/or shared memory units or buffers, using a message passing protocol or in any other suitable way. Exemplary blocks and units are described below carrying out one or more tasks, though it should be appreciated that the blocks or units and division of tasks described may be merely illustrative of the type of blocks or units that may implement the exemplary techniques described herein, and that the invention is not limited to being implement in any specific number, division, or type of blocks or units. In some implementations, all functionalities may be implemented in a single block or unit. Further, the blocks or units are discussed below as all executing on the device 600 for clarity, though it should be appreciated that, in some implementations, the blocks or units may be implemented on separate semiconductor devices adapted to communicate with one another, for example, via bus 604 or another direct communication link.

According to one embodiment, the device 600 may be implemented as an FPGA circuitry, where the line encompassing the processing circuitry 607 may denote an FPGA boundary. The device 600 may be an expansion card for the bus 604 of the host system. However, it is to be understood that other semiconductor techniques can be applied to implement the device 600. Figure 6 provides an overview of an internal hardware architecture of the device 600.

The device 600 may be described with regard to video data as simulated sensor data. However, it is to be understood that other simulated sensor data may be processed by the device 600, in any combination. In this example, video data may flow to and through the device 600, such that video frames may be moved by DMA from either GPU memory or a system memory of the host system to a memory 608 of the device 600.

As the simulated sensor data arrives via the bus interface 602, which may be a PCIe interface, the bus interface 602 may request access to the memory 608 from a Memory Arbiter of a memory logic 610. When access is granted, a Memory Multiplexer of the memory logic 610 may switch to connect the bus interface 602 to a Memory Controller 612. The simulated sensor data arriving via the bus interface 602 may then flow through the Memory Multiplexer of the memory logic 610 and the Memory Controller 612 and be written into the memory 608.

Under the control of a Video Timing Control Block of a Video Output Block 614a, 614b, and 614c, the simulated sensor data may be read from the memory 608 by the Video Output Block 614 and output to the respective video interface 606. This may include, for example, GMSL, FPD-III, or MIPI, to name a few. Like the bus interface 602, each Video Output Block 614 must request access to the memory 608 from the Memory Arbiter of the memory logic 610 in order to be granted access to read simulated sensor data from the memory 608 via the Memory Multiplexer and the Memory Controller 612.

The device 600 may further include a DMA Controller 616. The DMA Controller 616 may request data transfer from a memory, buffer, or hardware of the host system, such as a main memory or a GPU memory via the bus interface. The requested data stream may pass through the DMA Controller 616 and the memory logic 610 to the Memory Controller 612, which may write the data to the memory 608.

The memory logic 610 may implement the Memory Arbiter and the Memory Multiplexer. The memory logic 610 may implement a connection between the memory 608, which may be, for example, an external DDR4 memory on the FPGA board (used for sensor frame buffer), the DMA Controller 616, and the output interfaces 606. The memory logic 610 may implement scheduling of the memory access, for example, the DDR4 memory access. The Memory Multiplexer may switch the bus interface of the memory controller 612 between memory interfaces of each of the Video Output Blocks 614 and a memory interface of the DMA Controller 616. The sequence in which each of the clients is connected to the memory interface is controlled by the Memory Arbiter. The Memory Arbiter ensures that each client which is requesting access to the memory 608 is preferably serviced in strict rotation. This may be done to ensure that equal bandwidth is offered to all clients that are requesting access to the memory 608.

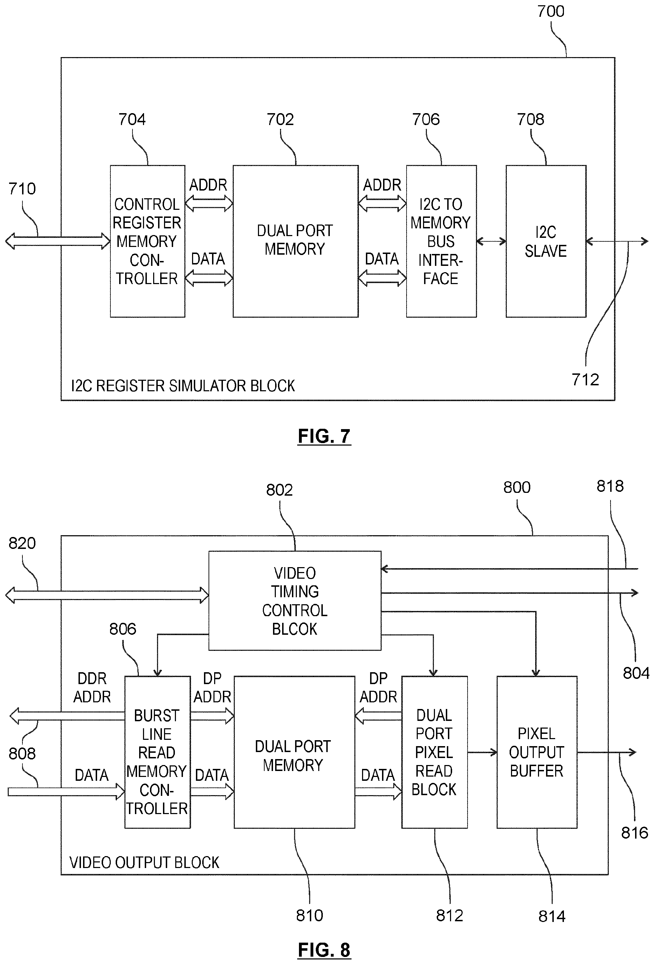

The device 600 may further include a plurality of I2C Register Simulator blocks 618, which are further described with regard to Figure 7 below.

The device 600 may further include a Control Register Block 620, an Interrupt Controller 622, and Serializer Hardware 624, which may be provided for each output interface 606.

The device 600 further enables timestamping and synchronization of the simulated sensor data. Timestamping and synchronization of simulated sensor data can be solved in several ways. By default, timestamp data is not provided by simulators through HDMI ports. HDMI ports only allow outputting image data; they do not contain metadata channels for accommodating timestamp or exposure time data (allowed auxiliary data concern only image or audio quality aspects; the defined Audio Timestamp InfoFrame only allows synthesizing the audio sample clock). Thus, timestamping of images could be solved only by burning timestamps into the actual image pixels, which is a harsh and unacceptable solution for industrial or automotive solutions.

A possible way of timestamping may be to cease this task to the host system or simulated test environment or any intermittent purpose-build hardware element, marking the moment when the simulated sensor data are read out from HDMI ports. However, this can cause measurable delays and uneven temporal distribution of video data.

Embodiments of the present disclosure may enable implementing timestamping logic on a custom HIL device, such as device 600. Timestamping is implemented close to the origin of the simulated sensor data. With this, parallel streams of simulated sensor data, such as parallel image or video streams, can be synchronized before they are transmitted in a batch to the simulated test environment. This solution can also cater to the synchronization of simulated sensor data for different sensors, such as video data with other sensor data (radar, LiDAR, or CAN signals) if they are also provided by the host system.

Embodiments of the present disclosure may also enable one or more feedback channels for sensor triggering, such as camera triggering. For example, feedback channels may be provided from the simulated test environment towards the host system, which may host one or more GPUs (simulator GPU server), through the device 600. For example, feedback channels enable propagation of exposure request (trigger or synchronization) signals from the simulated test environment back to the host system via the device 600 using interrupts triggered by the serialized camera trigger interference, in response to a frame request from the hardware or software component under test in the simulated test environment. The device 600 may notify a simulation engine, a simulation unit, or any other simulator software executing in the host system. For example, the device 600 may notify the simulator software via one or more interrupts. For example, in case of PCIe connectibility the device 600 may notify the simulator software via MSI interrupts. The one or more interrupts may be handled by the operating system of the host system and passed to the simulation engine, simulation unit, or simulator software. This allows the simulated test environment and the host system to stay in synchronization with the hardware or software component under test. This may be applied, for example, in multi-camera environments, for example, stereo view. This function would be significantly more difficult to be realized through an HDMI port as there are no dedicated signals for triggering.

Embodiments of the present disclosure may also enable flexible image sizes. HDMI ports allow outputting standard, easily scalable image sizes that apply standard proportions (16:9, 4:3). A typical image size example is 1280x720 pixels (around 1 Mpx). However, various sensors, such as automotive cameras, often apply non-standard image sizes, such as 1928x1208 pixels. These images are difficult to relay through HDMI ports without distortion or cropping. This is addressed by the device 600 and embodiments of the present disclosure that preferably allow outputting any image sizes of any proportions, resulting in lossless video data transmission.

Embodiments of the present disclosure may also simulate camera parameters and/or provide a reverse control channel. The device 600 may allow transmitting metadata towards the hardware or software component under test in the simulated test environment. This may also be used for relaying camera parameters or conditions. As the cameras' internal registers may also be simulated by the device 600, it may also be possible for the simulator to modify the simulated camera registers, to present camera-related metadata to the hardware or software component under test in the simulated test environment. For instance, a temperature sensor register of the camera could be set to simulate a high temperature in the sensor. This could be used, for example, to test over-temperature alarms in the hardware or software component under test in the simulated test environment. This function would be significantly more difficult to be realized through an HDMI port and would require additional devices to provide the configuration data path.

One preferred use case is using the device 600 with an Image Signal Processor (ISP). ISPs usually handle tone mapping, auto exposure, and color balance control, specifically tuned for a given sensor. For each video frame, the ISP may assume that the last set exposure time, global, and color channel gains are used, and from that assumption and the received frame the ISP may calculate the next set of the sensor parameters to use. In this case, latency can matter - although I2C communication, which may be used to set sensor parameters, may be usually slow (having a bit rate in the 100-1000 kHz range). Calculating with a 100 kHz I2C clock frequency and assuming 16-bit sensor register addresses and values, one register write (with the I2C communication overhead) takes around 0.5-1.0 milliseconds, while on 30 FPS the frame time is 33.333 milliseconds.

Should the transmission of the sensor settings have a big latency, the simulation software in the host system cannot prepare the next video frame with the configured exposure, sending a frame with the earlier configuration. This can result in oscillating of the exposure parameters when there is a transient in the image data (for example, when a bright frame follows a darker frame, like when a simulated vehicle exits from a tunnel). Small latencies allow the simulator software more time to render the image frames and reduce the oscillation.

With images transferred over HDMI, the configuration data path requires an additional device. This significantly increases overhead. For example, a common FTDI FT4222 chip can be used for capturing sensor I2C writes from an Electronic Control Unit (ECU), transmitting through USB and the USB driver stack. This increases the jitter and latency of the I2C data path resulting in ISP oscillation.

Embodiments of the present disclosure can emulate the sensor gains directly in the device 600 - eliminating additional latency after the control transmission passes through the output link channel or provide fast access for these registers via the bus 604. In the latter case, the simulator software could directly use these register values directly in a fragment shader code of the GPU generating the image(s) to be sent out.

Embodiments of the present disclosure support further sensors. Device 600 allows for transmitting other simulated sensor data through DMA access, for example, LiDAR point clouds. The simulator software in the host system or any suitable simulation unit in the host system can generate a point cloud from a 3D world model, and the resulting sensor data can be sent from either the processor or the GPU to the device 600. Similar to rendered data, any other simulated sensor data can be exchanged via a memory or a buffer of the host system or of the simulation unit on the host system, preferably using DMA by the device 600. Other sensor data types can be provided similarly, depending on the supported virtual sensors of the simulator software and/or the simulation units in the host system.

Embodiments of the present disclosure apply a custom hardware device, which is in one or more preferred embodiments a specifically programmed FPGA card with custom software drivers, that can be inserted into a PCIe slot of a GPU server (host system) hosting the simulator software, that can directly read memory or buffer of the GPU server preferably through Direct Memory Access (DMA) method, in order to access, retrieve, and process simulated sensor data.

Embodiments bypass standard ports, reducing delay significantly. Embodiments provide the video output of the host system to a simulated test environment (for an AD software) through real camera interface protocols, e.g., GMSL, FPD-Link, etc. In this way, the target AD software may detect the input as real camera frames. It also enables mimicking real cameras by relaying, for example, simulated camera parameters to the AD software (e.g., temperature). Embodiments further allow for flexible image sizes and lossless transmission. Embodiments further allow for communication through DMA in both directions, i.e., from the GPU server (host system) to the AD software host computer (simulated test environment) and vice versa. Embodiments further enable to trigger virtual camera sensors through feedback channels (backward communication). Embodiments further allow for transmitting further simulated sensor data through DMA access, for example, LiDAR point clouds. Embodiments further allow for early timestamping and synchronization of simulated sensor data.

In particular, embodiments of the present disclosure may be applied in a GPU server farm including a number of servers, incorporating hundreds of GPUs. This enables running thousands of simulated test cases on the GPU server farm every day. Providing the embedded devices 600 in one or more of the servers allows a complete HIL testing of automotive HW platforms while executing thousands of test cases in a shorter time. A complete HIL testing relying on standard sensor interface input saves hundreds of valuable hours of public road testing, which always requires at least two participants (a safety driver and an operator). Additionally, a typical large-scale regression test suite includes n thousand test cases (scenarios). Saving for example 100 milliseconds at each execution could save 2 · *n* minutes at each test suite run, allowing earlier discoveries of potential failures, and better utilization of the GPU servers. This behavior also mimics real, in-vehicle sensor data flow more truly and could reveal deficiencies earlier either in AD software, configuration or optimization of hardware platform, or simulation software.

Figure 7 provides details of a register simulator component of a device according to an embodiment of the disclosure. The register simulator component 700 may correspond to the I2C Register Simulator block 618 of the device 600 as shown in Figure 6. I2C is known in the art as an interface standard for chip-to-chip communication. The component 700 may read and feed sensor information through I2C messages towards an AD host computer, which may correspond to the host system as discussed in relation to Figure 6, for example. Registers of the component 700 can also be programmed from a simulator side, which may correspond to the simulated test environment as discussed in relation to Figure 6, for example. The embodiment of Figure 7 may enable I2C register simulation and/or an embedded control channel.

The register simulator component 700 may include a Dual Port Memory 702, a Control Register Memory Controller 704, an I2C to Memory Bus Interface 706, and an I2C block 708. Data from and to control registers, which may be implemented by the Control Register Block 620 of the device 600 of Figure 6, may be received via link 710 through the Control Register Memory Controller 704. The i2C component 708 may interface to serializer hardware via link 712, such as the Serializer Hardware 624 of the device 600 of Figure 6.

Both the GMSL and FPD protocols provision for an Embedded Control Channel which carries an I2C or UART communications channel, as well as a number of GPIO bits over the same physical link media as the video protocol. In the case of MIPI CSI-2, similar I2C and GPIO bits can be provided. The device 600 may present an I2C interface to each video output link 606. The I2C interface provides access to the dual port memory 702, which may also be accessible to the host system via the bus interface. The dual port memory 702 appears to a device at the other end of the video link (in the simulated test environment) to be control registers of the camera (or other sensors) which the device 600 is simulating. The control registers may be provided in the Control Register Block 620 of Figure 6. This setup allows the host environment to access configuration values written to the simulated sensor (camera), and to adjust the sensor simulation accordingly. The host system can also write simulated status information to the dual port memory (702), and the device at the other end of the video link (in the simulated test environment) can read this as if it were status information coming from a real sensor (camera).

The GPIO bits may be largely application-specific and user-defined. This may be implemented in the device 600. One use case may be camera synchronization. In this use case one of the GPIO bits is used by the device controlling the cameras to synchronize image capture. This synchronization of all cameras connected to a device is important in surround view, for example, where lack of synchronization would lead to inconstancies between the images. The device 600 can use one of the GPIO bits as a trigger to send a video frame.

Figure 8 details of a video output component of a device according to an embodiment of the disclosure. The video output component 800 may correspond to the Video Output Block 614a, 614b, and 614c of the device 600 as shown in Figure 6. The video output component 800 realizes an actual physical interface for cameras. The video output component 800 may denote a structure including a Video Timing Control Block 802. The Video Timing Control Block 802 may synthesize all the video sync signals H-sync, V-sync, and Data Enable. The signals may be output at 804. The Video Timing Control Block 802 may also produce signals which instruct a Burst Line Read Memory Controller 806 when it needs to schedule reading of pixel data from the memory 608 of the device 600 via interface 808 in order to keep sufficient pixel data in a Dual Port Memory 810 so that it can be read when required for output at a (correct) time. The Video Timing Control Block 802 controls the rate at which data is read to prevent too much data from being read and the Dual Port Memory 810 from being flooded with data since the Dual Port Memory 810 may be smaller than a whole video frame. On the other hand, the Video Timing Control Block 802 ensures that there is always sufficient data in the Dual Port Memory 810 and that the Dual Port Memory 810 does not become empty.

The Video Timing Control Block 802 is further configured to control operation of a Dual Port Pixel Read Block 812 and a Pixel Output Buffer 814 to ensure a timely output of pixel data via link 816.

The Video Timing Control Block 802 may further receive a Frame Sync via input link 818, and communicate with control registers, which may be implemented by the Control Register Block 620 of the device 600 of Figure 6 via link 820.

The geometry of output video frames (active pixels per line, active lines per frame, and blanking periods) may be controlled by the Video Timing Control Block 802. These parameters may be configured via the control registers of the device 600 via link 820.

When instructed by the Video Timing Control Block 802, the Burst Line Read Memory Controller 806 may read blocks of data in a burst manner from the memory 608 and write this data into the dual port memory 810. When signaled by the Video Timing Control Block 802 that a new frame will be starting, the Burst Line Read Memory Controller 806 may set its read pointer to point to the start of the frame video in the memory 608 of the device 600. The Burst Line Read Memory Controller 806 may then read pixel data and write it into the Dual Port Memory 810, preferably a burst at a time, when instructed to do so by the video timing control block 802, preferably incrementing its read pointer as it goes, until the hold frame has been read.

The pixel data is preferably transferred from the memory 608 to the Dual Port Memory 810 in high-speed bursts because multiple devices may require access to the memory 608, and access and bandwidth is preferably shared in a time-sliced manner. It would not be feasible for multiple devices to read data at pixel rate, or when they wished, as this would lead to contention for the memory 608, and it would also make memory access very efficient, as transferring bursts/blocks of data is greatly more efficient than individual transactions.

The Dual Port Memory 81 is preferably a special type of memory with two interfaces to a single memory array. Data can be written to or read from both interfaces simultaneously. In this system, the Burst Line Read Memory Controller 806 may read pixel data from the memory 608 and write it to the dual port memory 810 in high-speed bursts, so that the Dual Port Pixel Read Block 812 can steadily and continuously read out the pixel data at a pixel clock rate. In effect, the contents of the dual port memory 810 may constitute a buffer pool of pixel data to be output.

The Dual Port Memory 810 can contain significantly less data than is required for a whole picture frame; in fact, in preferred embodiments it can only hold a few lines. So, the Burst Line Read Memory Controller 806 and the Dual Port Pixel Read Block 812 may use the Dual Port Memory 810 as a ring buffer.

Under the control of the Video Timing Control Block 802, the Dual Port Pixel Read Block 812 preferably reads pixel data from the Dual Port Memory 802 at output pixel clock rate, and preferably within the H-sync, V-sync, and Data Enable framework. From the Dual Port Pixel Read Block 812, the video data has the timing characteristics of video data, not the high-speed block burst transfer seen earlier in the pipeline.

The Pixel Output Buffer 814 may be a functional block whose task may be to output the pixel data and the H-sync, V-sync, and Data Enable at the required time under the control of the Video Timing Control Block 802.

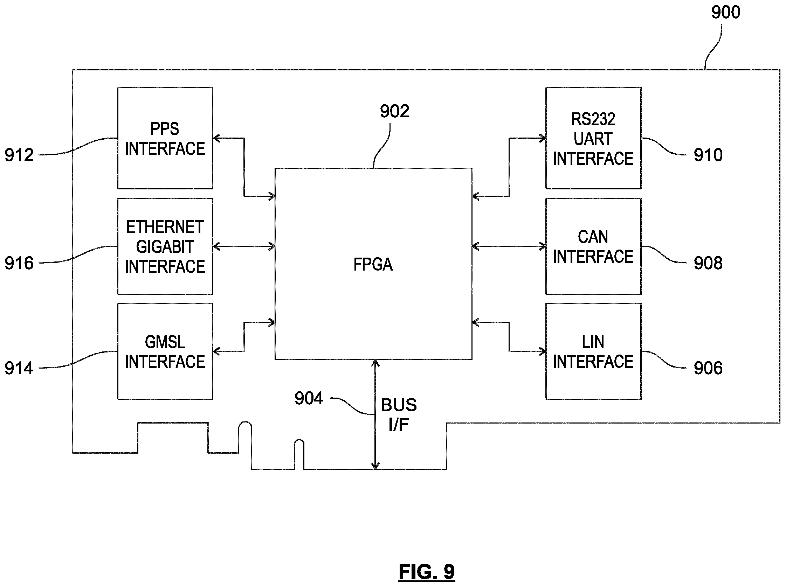

Figure 9 illustrates details of an implementation of a device according to an embodiment of the disclosure. The device 900 may correspond to the device 210 of Figure 2 or the device 600 of Figure 6. The device 900 may be an FPGA board with a FPGA circuitry 902 and a plurality of interfaces. The FPGA circuitry 902 may correspond to block 606 of Figure 6.

The device 900 may include a bus interface 904 that connects the FPGA circuitry 902 via a system bus, such as PCIe or any other bus technology/protocol, to a system memory, a GPU memory, and any other hardware component, to read simulated sensor data and to provide feedback channels to simulation units, such as the GPU.

The device 900 may further include a LIN interface 906. The LIN interface 906 may be configured to emulate vehicle sensor information, for example, temperature, gyroscope, etc.

The device 900 may further include a CAN interface 908. The CAN interface 908 may be configured to allow emulating sensor data that use CAN interfaces of vehicles (radar, vehicle wheel speeds, etc.).

The device 900 may further include one or more serial interfaces 910 and 912. Examples may include RS232, UART, PPS and the like, in any number and combination. Each one of the one or more serial interfaces 910 and 912 may be configured to emulate, e.g., GPS data or Inertial Measurement Unit data, to name a few.

The device 900 may further include one or more camera interfaces 914. Examples may include a GMSL interface. Each of the one or more camera interfaces 914 may represent a typical camera interface to relay camera streams to a target AD hardware platform or any other target platform in an industrial setting.

The device 900 may further include an Ethernet Gigabit interface 916. The Ethernet Gigabit interface 916 may be configured to emulate, e.g., LiDAR sensor data or radar data, to name a few.

Even though device 900 has been illustrated as including a plurality of interfaces 904, ..., 916, it is to be understood that embodiments of the present disclosure may include a subset of the interfaces 904, ..., 916, in any combination. For example, one embodiment may comprise the bus interface 904 to communicate with the host system and one or more serial interfaces 914 to communicate with a simulated test environment. Further embodiments may be adapted to reflect a simulation or test scenario based on simulated sensors and the tested dedicated hardware or software component.

It is to be understood that the implementational details as provided in Figures 1 to 9 represent preferred examples. Other implementations using different components, modules, blocks, units, circuitry, connections, and links can be used, and the present disclosure is not restricted by a particular implementation in silicon.

While some embodiments have been described in detail, it is to be understood that aspects of the disclosure can take many forms. In particular, the claimed subject matter may be practiced or implemented differently from the examples described, and the described features and characteristics may be practiced or implemented in any combination. The embodiments shown herein are intended to illustrate rather than to limit the invention as defined by the claims.

## Claims

1. A device for processing simulated sensor data, comprising:
a processing circuitry (607) configured to process simulated sensor data generated by a host system;
a bus interface (602) configured to connect the processing circuitry (607) to a bus (604) of the host system and to retrieve the simulated sensor data; and
at least one output interface (606a, 606b, 606c) configured to connect the processing circuitry (607) to a simulated test environment and to output the processed simulated sensor data.

2. The device according to claim 1, wherein the processing circuitry (607) is configured to convert the simulated sensor data.

3. The device according to claim 1 or 2, wherein the processing circuitry (607) is configured to output one or more of sensor parameters and status information.

4. The device according to any one of the preceding claims, further comprising a feedback interface connectable to the simulated test environment and configured to receive one or more parameters, wherein the processing circuitry (607) is configured to pass at least some of the one or more parameters to the host system.

5. The device according to any one of the preceding claims, wherein the processing circuitry (607) is configured to timestamp the processed simulated sensor data.

6. The device according to any one of the preceding claims, further comprising a memory (608) and a memory logic (610), wherein the bus interface (602) is configured to buffer the simulated sensor data in the memory (608) and the processing circuitry (607) is configured to request access to the buffered simulated sensor data via the memory logic (610).

7. The device according to any one of the preceding claims, wherein the simulated sensor data is one or more of graphics data, radar data, and LiDAR data.

8. The device according to any one of the preceding claims, wherein the device is a semiconductor card.

9. The device according to any one of the preceding claims, wherein the bus interface (602) is a parallel or serial expansion bus interface.

10. The device according to any one of the preceding claims, wherein the simulated test environment is an autonomous driving simulator.

11. A host system for simulating sensor data, comprising:
at least one central processing unit (204), a bus (206), and system memory;
at least one simulation unit coupled (208) to the bus (206) and configured to generate simulated sensor data; and
at least one device (210) coupled to the bus (206), the device (210) according to any one of the preceding claims.

12. A simulated test environment, comprising:
one or more processing units, each processing unit configured to simulate a physical environment using one or more simulated sensor data, wherein at least one of the one or more simulated sensor data is received from a host system according to claim 11.

13. A method for processing simulated sensor data, comprising:
providing (304) a device with a bus interface, at least one output interface, and a processing circuitry, the bus interface coupled to a bus of a host system and the at least one output interface connected to a simulated test environment;
retrieving (306), by the bus interface, simulated sensor data generated by the host system;
processing (308), by the processing circuitry, the simulated sensor data; and
outputting (310), by the processing circuitry, the processed simulated sensor data via the at least one output interface.

14. The method according to claim 13, wherein the method is performed on a device as defined in any one of the claims 1 to 10.

15. At least one computer-readable medium storing instructions thereon that, when executed on a computing device, configure the computing device to perform a method according to claim 13 or 14.
